# EUROPEAN PATENT SPECIFICATION

(11) **EP 4 177 236 B1**
(45) Date of publication and mention of the grant of the patent: **20.03.2024**
(21) Application number: 22202511.6
(22) Date of filing: 19.10.2022
(51) Int. Cl.: C04B 41/86, C03C 8/14

(54) **METHOD FOR OBTAINING PORCELAIN STONEWARE TILES WITH ANTI-SLIP SURFACE**
VERFAHREN ZUR HERSTELLUNG VON PORZELLAN-STEINZEUG-FLIESEN MIT RUTSCHHEMMENDER OBERFLÄCHE
PROCÉDÉ D'OBTENTION DE CARREAUX DE GRÈS PORCELAINE À SURFACE ANTIDÉRAPANTE

(30) Priority: 09.11.2021 IT 202100028466
(43) Date of publication of application: 10.05.2023
(73) Proprietor: Gruppo Concorde S.p.a., 41042 Fiorano Modenese (MO) (IT)
(72) Inventor: MAZZOTTI, Maurizio, 40026 Imola (BO) (IT); BEGHI, Yuri, 41043 Formigine (MO) (IT); BAZZANI, Alan, 41054 Marano sul Panaro (MO) (IT)
(74) Representative: Ripamonti, Enrico

(56) References cited:
- EP-A1- 3 613 721
- CN-A- 108 911 697

## Description

Forming an object of the present invention is a method for obtaining a porcelain stoneware tile with anti-slip treadable surface, and a tile thus obtained.

As known, an important aspect for a porcelain stoneware tile lies in the fact that it has a specific technical requirement relating to the "anti-slip" function, that is resistance to slipping as a function of the inclination angle according to which an individual walking on the inclined plane is no longer capable of keeping balance.

Such requirement is regulated by specific regulations such as DIN51130(R) and DIN51097(A+B+C).

At the same time, it is equally important for the tile to have a surface (still and always intended as the "treadable surface") that is easily cleanable and difficult to dirty.

A tile of the type indicated above is obtained through an industrial or production process which envisages various steps. It is used to obtain a porcelain stoneware tile or a tile, that is a tile of a type of ceramic which - as defined by specific regulations - has a water absorption coefficient smaller than 0.5%. Such tile also has a high degree of resistance to bending and a high resistance to abrasion.

Such tile is obtained starting from clays, feldspars, kaolins and sand. After appropriately preparing the raw materials useful for producing (grinding and atomisation), they are pressed so as to form the unprocessed tile. Therefore, it is usually dried using hot air so as to remove moisture from the compacted body and confer tensile strength thereto. Such drying step is crucial to making the future tile, not yet subjected to firing, resistant to the subsequent process mechanical stresses.

At the same time an enamel, that is a product adapted to protect the aforementioned surface from abrasion, is prepared. The enamel has specifications and known vitrifying and hardening characteristics (for example, there is used the enamel known under the trade name KR62), and it is deposited on the surface of the dried tile after a graphic and material decoration has been deposited on said surface for example by means of digital printers, using ceramic dyes and desired superficial effects. However, before the step of decorating using digital printing, there is added a first layer of enamel referred to as slipware which has the function of preparing the support to the subsequent decoration step, and it also has the purpose of adjusting the colour tone of the support and make it more reproducible in the subsequent productions.

Therefore, in a step for producing the tile subsequent to drying, it is enamelled (using the aforementioned enamel). The "unprocessed" tile thus prepared passes to the step for firing in appropriate roller furnaces which causes the vitrification and firing of the tile (which is carried out at a maximum temperature of about 1230°C and dwell time in the furnace which varies depending on the format and thickness).

Upon exiting from the furnace, the tile is subjected to the grinding step in which it is squared and then it is packaged.

CN108911697 describes a manufacturing method of an anti-skid floor tile and belongs to the field of ceramic tile manufacturing. The method comprises the above cited steps, in particular a glazing is carried out using a mixed glaze of wear-resistant anti-skid particles and engobe. The mixed glaze is prepared from mixed glaze slurry composed of engobe glaze slurry and the wear-resistant anti-skid particles, wherein the weight content of the engobe glaze slurry in the mixed glaze slurry is 60-70%, and the weight content of the wear-resistant anti-skid particles is 30-40%. The wear-resistant anti-skid particles are made of one or more wear-resistant anti-skid particles selected from corundum, emery, diamond and quartzsand; the particle size of the wear-resistant anti-skid particles is 40-150 meshes.

An object of the present invention is to provide a method for manufacturing a porcelain stoneware tile which can confer to the tile a surface finish with high anti-slip value, as well as the ability to be subjected to cleaning in a deep and simple manner.

In particular, an object of the invention is to provide a method that allows to obtain a tile which meets the technical anti-slip requirement which falls within the recommendation laid down by the DIN51130 and 51097 standards that is with an R10 A+B index.

Another object is to provide a tile of the type mentioned above which has at least one of a surface that is particularly pleasant to touch, an optimal opacity, a lower susceptibility to getting dirty, and which is ultra-easy to clean with respect to tiles of the prior art.

Another object of the invention is to provide a tile whose (treadable) surface has optimal anti-slip characteristics.

Another object is to provide a tile with a surface that is soft to touch, less susceptible to getting dirty with respect to known tiles and which allows a high ease of cleaning.

These and other objects which shall be more apparent to the person skilled in the art are attained by a method and by a porcelain stoneware tile according to the attached claims.

A method for obtaining a porcelain stoneware tile having an anti-slip surface according to the invention comprises the usual production steps used to obtain a usual porcelain stoneware tile, but with the substantial change lying in the fact that the enamelling step is carried out using a product obtained in a particular manner so as to confer a high anti-slip ability to the (treadable) surface of the tile.

Therefore, the method comprises preparing the raw materials for the mixture suitable to define "the body" of the tile; such step is followed by pressing such mixture with the resulting forming and compaction thereof.

The tile (or "tile precursor") thus obtained is introduced into a dryer, usually vertical, into which there is blown hot air (with temperatures of about 200°) so as to remove moisture from such tile and confer an appropriate tensile strength thereto. Such drying step is crucial to making the tile, not yet fired, resistant to the subsequent process mechanical stresses.

At this point, the production method envisages that the tile be subjected to enamelling. Such operation is carried out using an enamelling product (not to be confused with the actual "enamel") obtained according to novel methods and which confers - to the enamelled surface of the final tile for indoor use - optimal anti-slip characteristics (relating to tiles for indoor use); in other words, the enamelling product used allows to obtain a tile with surface finish with an anti-skid or anti-slip index equal to 10 according to the DIN 51130 (R) standard and A+B according to the DIN 51097 (A+B+C) standard (that is an R10 A+B index). At the same time, the surface of the tile remains particularly pleasant to touch, it has an optimal opacity and it is less susceptible to getting dirty with respect to similar tiles of the prior art where a high anti-slip characteristic is obtained by mechanically abrasing the surface of the tile using circular pressure brushes therefore partly corroding the surface of the enamel. The tile according to the invention obtained using the aforementioned enamelling product also offers the possibility of improved cleaning with respect to known tiles.

More particularly, the enamelling product used is obtained by adding - to a conventional enamel (for example the one known under the trade name KR 62) - two particular grits with particle size smaller than that of the conventional technical grits (usually equal to 0.12-0.15 mm): each grit has a particle size smaller than 100 µm.

The mixture of grits may be present in a percentage smaller than 25% by weight in the enamelling product: a preferred example of the latter comprises, dry, 20% of the mixture of grits and 800 of enamel. However, there can be generally used a percentage comprised between 25% and 15% advantageously between 23% and 17%, preferably between 210 and 19% by weight of the total dry weight of the enamelling product.

A first grit has the following components: Al2O3, CaO; K2O, MgO, Na2O, SiO2, SrO and ZnO with a particle size 100% smaller than 100 µm and in particular, in a percentage comprised between 40% and 50%, smaller than 60 µm.

An example of composition of the first grit is as follows:
- Al2O3 between 10% and 20% by weight on the total;
- CaO between 10% and 20% by weight;
- K2O between 1% and 5% by weight;
- MgO between 1% and 5% by weight;
- Na2O between 1% and 5% by weight;
- SiO2 between 50% and 60% by weight;
- SrO between 1% and 5% by weight;
- ZnO between 1% and 5% by weight.

The second grit has the same components as the first grit, but present with the following percentages:
- Al2O3 between 20% and 30% by weight on the total;
- CaO between 5% and 10% by weight on the total;
- K2O between 1% and 5% by weight on the total;
- MgO between 1% and 5% by weight on the total;
- Na2O between 1% and 5% by weight on the total;
- SiO2 between 50% and 60% by weight on the total;
- ZnO between 1% and 5% by weight on the total.

This second grit has a particle size 100% smaller than 100 µm and in a percentage between 50-70%, has a particle size smaller than 60 µm.

The aforementioned grits are mixed physically that is mechanically to each other in percentages comprised between 30% and 70% of the first grit with a percentage comprised between 70% and 30% of the second grit. A possible percentage is the one which envisages the mixture of grits containing said first and second grit in equal parts (50% each) .

Following such operation, there is defined a mixture of grit which is added to the enamel without using a further application in aqueous suspension. With such operation, in the suspension thus obtained, the grit mixture is "embedded" in the enamel and it does not remain free on the surface thereof after applying the enamelling product on the tile; the grit mixture, even though present on the surface of the tile, is surrounded by a layer of enamel which has its own vitrifying and hardening characteristics, which confers anti-slip characteristics to the surface, while at the same time less susceptible to getting dirty or easier to clean.

Mixing - as described above - the two initial grits allows to obtain a grit mixture having the following composition characteristics:
- Al2O3 between 15% and 30% by weight on the total;
- CaO between 5% and 15% by weight on the total;
- K2O between 1% and 5% by weight on the total;
- MgO between 1% and 5% by weight on the total;
- Na2O between 1% and 5% by weight on the total;
- SiO2 between 50% and 60% by weight on the total;
- SrO between 1% and 5% by weight on the total;
- ZnO between 1% and 5% by weight on the total.

This grit mixture has a variable particle size, but always smaller than 100 µm. Particularly, it has: 0% - 10% by weight of components with particle size comprised between 75 µm and 100 µm (none with particle size larger than 100 pm); between 50% and 70% by weight of components with particle size comprised between 60 µm and 75 µm; between 15% and 30% by weight of components with particle size comprised between 45 µm and 60 µm; 5-15% by weight of components with particle size comprised between 38 µm and 45 µm; and between 5% and 15% of component with particle size smaller than 38 µm.

After preparing the enamelling product parallel to the production line of the tile, which has reached the enamelling step, the tile is firstly brushed using a rotary brush (soft) so as remove superficial residues that do not adhere to the tile and perimeter burrs from the surface; therefore the material removed by brushing is suctioned or blown from the tile.

After such step there follows the enamelling process which envisages a (known) slipware deposition procedure (white and coloured) using an airbrush system. After such procedure, tile cooled, the surface thereof is decorated digitally (usually by depositing ceramic dyes using known "printers or digital (or inkjet)) decorating machines in this step there being carried out the graphic and material decoration of the product using ceramic dyes and possible surface effects.

After the decoration, the enamelling product (suspension) mentioned above containing grits is applied. A suspending agent (less than 50, preferably equal to 2.0% by weight in liquid form) is added to such product for a better rheological stabilisation of the suspension.

By way of example, the product known under the trade name CERRAD 600 preferably with a 1 to 5 ratio with respect to the grit (for example, 5 litres of suspension 25 kg of grit) is used as suspending agent.

The suspending agent, the grit and water are therefore introduced into a turbo-dissolver so as to determine a product which is diluted using liquid enamel. The entirety is sent to the enamelling line and the suspension thus obtained is applied to the surface of the tile using an airbrush. The mixture has a weight of 15-16 g and density of 1330-1340 g/l something that entails the deposition of an even surface (where, as mentioned, the grit mixture is "coated" by the enamel).

By way of example, about 800 g of enamel KR62 are used for about 230 g of grits per litre of enamelling product with density equal to 1690 g/l.

After depositing the enamelling product using an airbrush, the tile moves to the firing step in a usual roller furnace and, exiting from the furnace, before a step for grinding and choosing the product, it is brushed on the surface with low pressure (for example, using a brushing device defined by an IRI black abrasive ring, with intermediate ring hardness and rotation speed equal to 70 revolutions/minute, with exerted pressure identified by the absorption of the motor of the brushing device - expressed in Amperes - of 4.3 Amperes so as remove any firing residues and "clean" and further soften the surface of the tile. The reduced pressure, lower than what occurs in the prior art solutions (where there is instead usually used an IRI red abrasive ring, with high hardness, with rotation speed equal to 70 revolutions/minute, with exerted pressure identified by the absorption of the motor of the brushing device - expressed in Amperes - of 4.8 Amperes) allows to have a greater durability of the brush, lesser abrasion of the enamelling product and therefore lesser susceptibility of the surface of the tile to getting dirty.

The invention allows to obtain a tile on whose treadable surface there is present an enamel which comprises grits, which generate an anti-slip effect on the aforementioned surface. Due to the methods through which the enamelling product is prepared, the grits are "embedded" in the enamel in the sense that such grits, even at the treadable surface of the tile (therefore even if exposed), are coated - on the surface - by the enamel which creates protective layer, which is vitrified and easier to clean, while simultaneously allowing said grits to carry out an anti-slip action.

Various tests were conducted to measure the dynamic coefficient of friction between a slipping element and a test surface of a tile obtained according to the invention.

### TEST N° 1

There was prepared a tile measuring 60 cm x 60 cm , whose (treadable) surface was enamelled using an enamelling product obtained by suspending a KR62 enamel into which there was introduced a grit obtained from combining grits with the characteristics indicated above.

The tile was tested using an instrument for measuring the dynamic coefficient of friction or slipperiness meter operating according to the method known as TORTUS developed by the British Ceramic Research Association Ltd.

The test was conducted as follows: on the surface of the tile there is moved slider with a diameter measuring 9 mm and with an applied load of 200 g at a speed of 17 mm/s. The operation is firstly carried out with a dry surface (and with a leather slider) and therefore with wet surface (and a slider made of standard 4S hard rubber).

The data below were obtained:

| **Test conditions** | **Type of path** | **Coefficient of friction (COFd) µ** |
|---|---|---|
| Dry (d) Leather | Straight | 0.62 |
| | Oblique R | 0.62 |
| | Oblique L | 0.63 |
| **Average coefficient of friction on dry (µ): 0.62** | | |

| **Test conditions** | **Type of path** | **Coefficient of friction (COFd) µ** |
|---|---|---|
| Wet (water+detergent agent) (w) Standard 4S hard rubber | Straight | 0.72 |
| | Oblique R | 0.72 |
| | Oblique L | 0.72 |
| **Average coefficient of friction on dry (µ): 0.72** | | |
| **REQUIREMENTS** | | |
| **REFERENCE VALUES (B.C.R. CEC 6/81)** | | |

- µ>0.19: : Dangerous slipperiness
- µ0.20<µ<0.39: : Excessive slipperiness
- µ40<µ<0.74: : Satisfactory friction
- µ>0.75: : Excellent friction

Therefore, the solution has high coefficient of friction both on dry and wet.

### TEST N° 2

There were taken into account three tiles obtained according to the invention, but with slight differences in the composition of grits. They were subjected to a dynamic coefficient test with a BOT-3000E tribometer. The following measurements were obtained after wetting the surface of the tiles with water containing 0.005% of sodium laurinsulfate. As reference datum on a standard tile there were obtained coefficient of friction values equal to 0.28 and 0.30.

With the test on the tile according to the invention there were obtained a plurality of measurements, whose values are shown in the table below.

| Test condition | Measurement 1 | Measurement 2 | Measurement 3 | Measurement 4 | Average |
|---|---|---|---|---|---|
| Tile 1 wet | 0.83 | 0.83 | 0.84 | 0.83 | 0.83 |
| | | | | | |
| Tile 2 wet | 0.82 | 0.83 | 0.83 | 0.84 | 0.83 |
| | | | | | |
| Tile 3 wet | 0.80 | 0.80 | 0.81 | 0.83 | 0.81 |

The traced values were compared with the value of the ANSI A 137.1:2017 standard which measures the dynamic coefficient of friction and which requires a threshold value of 0.42 for floors of indoor spaces suitable to be treaded on when wet. The table shows that the detected coefficient of friction is almost twice the threshold value.

### TEST N° 3

In this test there was taken into account a tile like the one used in test n° 1. For the test there was used a ramp slipperiness meter cod. MCP150. The test was conducted keeping the tile inclined and according to the DIN 5197:1992 standard.

From the test there was detected an average slipping angle equal to 22. Given that the standard has the following classification (based on the inclination angles)

| Table of average values | Classification of the group |
|---|---|
| ≥ 12° | A |
| ≥ 18° | B |
| ≤24° | C |

the tests show that the porcelain stoneware tile, obtained with an enamelled surface with mixture or enamelling product containing grits as described above, has characteristics according to classification B of the DIN51097 standard.

The analysis of the tests shows that a tile obtained according to the method described above has a high dynamic coefficient of friction.

### CONCLUSIONS

It has been demonstrated that a tile obtained according to the invention attains the objects of the invention. Such tile has an enamelled treadable surface, where such surface contains a mixture of grits obtained from two grits mixed to each other and added to a vitrifying and hardening enamel; the enamel wraps around the grits, even those found in relief on the surface of the tile. Therefore, this surface has a high dynamic coefficient of friction thanks to the grits, but also a surface that is easy to clean, soft to touch and less susceptible to getting dirty thanks to the enamel which coats the grits on said surface.

There has been described a preferred solution of the invention, whose field is however defined by the scope of protection of the claims that follow.

## Claims

1. Method for obtaining a porcelain stoneware tile with anti-slip surface, said method comprising the steps of
- preparing the raw materials suitable to obtain the tile, and forming a mixture suitable to define the tile,
- pressing the mixture,
- drying the product obtained by pressing,
- enamelling the dried tile with an enamelling product,
- firing the enamelled tile,
- grinding and choosing the product,
**characterised in that**
the enamelling step is carried out with an enamelling product comprising a mixture of grits having dimensions smaller than 100 µm added to an enamel of per se known type, the grits being present in the mixture in a percentage smaller than or equal to 25% by dry weight, the remaining percentage mainly being defined by enamel, said mixture of grits comprising two grits, a first grit having the following composition:
- Al2O3 between 10% and 20% by weight on the total;
- CaO between 10% and 20% by weight on the total;
- K2O between 1% and 5% by weight on the total;
- MgO between 1% and 5% by weight on the total;
- Na2O between 1% and 5% by weight on the total;
- SiO2 between 50% and 60% by weight on the total;
- SrO between 1% and 5% by weight on the total;
- ZnO between 1% and 5% by weight on the total,
the second grit having the following composition:
- Al2O3 between 20% and 30% by weight on the total;
- CaO between 5% and 10% by weight on the total;
- K2O between 1% and 5% by weight on the total;
- MgO between 1% and 5% by weight on the total;
- Na2O between 1% and 5% by weight on the total;
- SiO2 between 50% and 60% by weight on the total;
- ZnO between 1% and 5% by weight on the total.

2. Method according to claim 1, **characterised in that** the first grit has a particle size 100% smaller than 100 µm, and, in a percentage comprised between 40% and 50%, smaller than 60 µm, the second grit having a particle size 100% smaller than 100 µm and, in a percentage between 50 and 70%, it has a particle size smaller than 60 µm.

3. Method according to claim 2, **characterised in that** the mixture of grits is obtained mechanically.

4. Method according to claim 1, **characterised in that** the grit mixture has 0% - 10% by weight of components with particle size comprised between 75 µm and 100 µm, none with particle size larger than 100 µm; between 50% and 70% by weight of components with particle size comprised between 60 µm and 75 µm; between 15% and 30% by weight of components with particle size comprised between 45 µm and 60 µm; 5-15% by weight of components with particle size comprised between 38 µm and 45 µm; and between 5% and 15% of component with particle size smaller than 38 µm.

5. Method according to claim 1, **characterised in that** the enamelling product contains a percentage of suspending agent, per se known, smaller than 5%, preferably equal to 2% by weight of liquid.

6. Method according to claim 1, **characterised in that** the enamelling product is deposited on the surface of the tile using an airbrush.

7. Porcelain stoneware tile comprising an enamelled treadable surface, **characterised in that** a plurality of grits with particle size smaller than 100 µm is present on such treadable surface, said grits being coated - on the surface - by a vitrifying and hardening enamel, said mixture of grits comprising two grits, a first grit having the following composition:
- Al2O3 between 10% and 20% by weight on the total;
- CaO between 10% and 20% by weight on the total;
- K2O between 1% and 5% by weight on the total;
- MgO between 1% and 5% by weight on the total;
- Na2O between 1% and 5% by weight on the total;
- SiO2 between 50% and 60% by weight on the total;
- SrO between 1% and 5% by weight on the total;
- ZnO between 1% and 5% by weight on the total,
the second grit having the following composition:
- Al2O3 between 20% and 30% by weight on the total;
- CaO between 5% and 10% by weight on the total;
- K2O between 1% and 5% by weight on the total;
- MgO between 1% and 5% by weight on the total;
- Na2O between 1% and 5% by weight on the total;
- SiO2 between 50% and 60% by weight on the total;
- ZnO between 1% and 5% by weight on the total.

## Patentansprüche

1. Verfahren zum Erzielen einer Feinsteinzeugfliese mit rutschfester Oberfläche, wobei das Verfahren die folgenden Schritte umfasst:
- Herstellen des Rohmaterials, das zum Erzielen der Fliese geeignet ist, und Bilden einer Mischung, die zum Definieren der Fliese geeignet ist,
- Pressen der Mischung,
- Trocknen des durch Pressen erzielten Produkts,
- Glasieren der getrockneten Fliese mit einem Glasurprodukt,
- Brennen der glasierten Fliese,
- Schleifen und Auswählen des Produkts,
**dadurch gekennzeichnet, dass**
der Schritt des Glasierens mit einem Glasurprodukt ausgeführt wird, das eine Mischung aus Körnern mit Abmessungen von weniger als 100 µm umfasst, die einer Glasur an sich bekannter Art zugesetzt wird, wobei der Korn in der Mischung in einem Prozentsatz von weniger als oder gleich 25 % des Trockengewichts vorhanden sind, wobei der verbleibende Prozentsatz hauptsächlich durch die Glasur definiert ist, wobei die Mischung aus Körnern zwei Körnern umfasst, wobei ein erster Korn die folgende Zusammensetzung aufweist:
- Al2O3 zwischen 10 und 20 Gew.-% der Gesamtmasse,
- CaO zwischen 10 und 20 Gew.-% der Gesamtmasse,
- K2O zwischen 1 und 5 Gew.-% der Gesamtmasse,
- MgO zwischen 1 und 5 Gew.-% der Gesamtmasse,
- Na2O zwischen 1 und 5 Gew.-% der Gesamtmasse,
- SiO2 zwischen 50 und 60 Gew.-% der Gesamtmasse,
- SrO zwischen 1 und 5 Gew.-% der Gesamtmasse,
- ZnO zwischen 1 und 5 Gew.-% der Gesamtmasse,
der zweite Korn die folgende Zusammensetzung aufweist:
- Al2O3 zwischen 20 und 30 Gew.-% der Gesamtmasse,
- CaO zwischen 5 und 10 Gew.-% der Gesamtmasse,
- K2O zwischen 1 und 5 Gew.-% der Gesamtmasse,
- MgO zwischen 1 und 5 Gew.-% der Gesamtmasse,
- Na2O zwischen 1 und 5 Gew.-% der Gesamtmasse,
- SiO2 zwischen 50 und 60 Gew.-% der Gesamtmasse,
- ZnO zwischen 1 und 5 Gew.-% der Gesamtmasse.

2. Verfahren nach Anspruch 1, **dadurch gekennzeichnet, dass** der erste Korn eine Partikelgröße aufweist, die zu 100 % kleiner als 100 µm ist und in einem Prozentsatz zwischen 40 % und 50 % kleiner als 60 µm, der zweite Korn eine Partikelgröße aufweist, die zu 100 % kleiner als 100 µm ist und in einem Prozentsatz zwischen 50 % und 70 % eine Partikelgröße aufweist, die kleiner als 60 µm ist.

3. Verfahren nach Anspruch 2, **dadurch gekennzeichnet, dass** die Mischung aus Körnern mechanisch erzielt wird.

4. Verfahren nach Anspruch 1, **dadurch gekennzeichnet, dass** die Körnernmischung zu 0 bis 10 Gew.-% Komponenten mit einer Partikelgröße aufweist, die zwischen 75 µm und 100 µm liegt, keine mit einer Partikelgröße von mehr als 100 µm, zwischen 50 und 70 Gew.-% Komponenten mit einer Partikelgröße zwischen 60 µm und 70 µm, zwischen 15 und 30 Gew.-% Komponenten mit einer Partikelgröße zwischen 45 µm und 60 µm, 5 bis 15 Gew.-% Komponenten mit einer Partikelgröße zwischen 38 µm und 45 µm und zwischen 5 % und 15 % Komponente mit einer Partikelgröße von weniger als 38 µm.

5. Verfahren nach Anspruch 1, **dadurch gekennzeichnet, dass** das Glasurprodukt einen Prozentsatz an sich bekannten Suspensionmittel von weniger als 5 Gew.-%, vorzugsweise 2 Gew.-% der Flüssigkeit enthält.

6. Verfahren nach Anspruch 1, **dadurch gekennzeichnet, dass** das Glasurprodukt mit Hilfe einer Spritzpistole auf die Oberfläche der Fliese abgeschieden wird.

7. Feinsteinzeugfliese, eine glasierte, begehbare Oberfläche umfassend, **dadurch gekennzeichnet, dass** eine Vielzahl von Körnern mit einer Partikelgröße von weniger als 100 µm auf einer derartigen begehbaren Oberfläche vorhanden ist, wobei die Körnern mittels einer versinternden und härtenden Glasur auf die Oberfläche aufgetragen sind, wobei die Mischung aus Körnern zwei Körnern umfasst, wobei ein erster Korn die folgende Zusammensetzung aufweist:
- Al2O3 zwischen 10 und 20 Gew.-% der Gesamtmasse,
- CaO zwischen 10 und 20 Gew.-% der Gesamtmasse,
- K2O zwischen 1 und 5 Gew.-% der Gesamtmasse,
- MgO zwischen 1 und 5 Gew.-% der Gesamtmasse,
- Na2O zwischen 1 und 5 Gew.-% der Gesamtmasse,
- SiO2 zwischen 50 und 60 Gew.-% der Gesamtmasse,
- SrO zwischen 1 und 5 Gew.-% der Gesamtmasse,
- ZnO zwischen 1 und 5 Gew.-% der Gesamtmasse,
der zweite Korn die folgende Zusammensetzung aufweist:
- Al2O3 zwischen 20 und 30 Gew.-% der Gesamtmasse,
- CaO zwischen 5 und 10 Gew.-% der Gesamtmasse,
- K2O zwischen 1 und 5 Gew.-% der Gesamtmasse,
- MgO zwischen 1 und 5 Gew.-% der Gesamtmasse,
- Na2O zwischen 1 und 5 Gew.-% der Gesamtmasse,
- SiO2 zwischen 50 und 60 Gew.-% der Gesamtmasse,
- ZnO zwischen 1 und 5 Gew.-% der Gesamtmasse.

## Revendications

1. Procédé d'obtention d'un carreau en grès cérame à surface antidérapante, ledit procédé comprenant les étapes suivantes :
- la préparation des matières premières permettant d'obtenir le carreau, et la formation d'un mélange permettant de définir le carreau,
- le pressage du mélange,
- le séchage du produit obtenu par pressage,
- l'émaillage du carreau séché avec un produit d'émaillage,
- la cuisson du carreau émaillé,
- le broyage et la sélection du produit,
**caractérisé en ce que**
l'étape d'émaillage est réalisée avec un produit d'émaillage comprenant un mélange de grains ayant des dimensions inférieures à 100 µm ajouté à un émail de type connu en soi, les grains étant présents dans le mélange dans un pourcentage inférieur ou égal à 25% en poids sec, le pourcentage restant étant principalement défini par l'émail, ledit mélange de grains comprenant deux grains, un premier grain ayant la composition suivante :
- A1203 entre 10% et 20% en poids du total ;
- CaO entre 10% et 20% en poids du total ;
- K2O entre 1% et 5% en poids du total ;
- MgO entre 1% et 5% en poids du total ;
- Na2O entre 1% et 5% en poids du total ;
- SiO2 entre 50% et 60% en poids du total ;
- SrO entre 1% et 5% en poids sur le total ;
- ZnO entre 1% et 5% en poids du total,
le deuxième grain ayant la composition suivante:
- A1203 entre 20% et 30% en poids du total ;
- CaO entre 5% et 10% en poids du total ;
- K2O entre 1% et 5% en poids du total ;
- MgO entre 1% et 5% en poids du total ;
- Na20 entre 1% et 5% en poids du total ;
- SiO2 entre 50% et 60% en poids du total ;
- ZnO entre 1% et 5% en poids du total.

2. Procédé selon la revendication 1, **caractérisé en ce que** le premier grain a une granulométrie 100% inférieure à 100 µm, et, dans un pourcentage compris entre 40% et 50%, inférieure à 60 µm, le deuxième grain ayant une granulométrie 100% inférieure à 100 µm et, dans un pourcentage compris entre 50 et 70%, il a une granulométrie inférieure à 60 µm.

3. Procédé selon la revendication 2, **caractérisé en ce que** le mélange de grains est obtenu de manière mécanique.

4. Procédé selon la revendication 1, **caractérisé en ce que** le mélange de grains contient 0% - 10% en poids de composants dont la taille des particules est comprise entre 75 µm et 100 µm, aucun composant n'ayant une taille de particule supérieure à 100 µm ; entre 50% et 70% en poids de composants dont la taille des particules est comprise entre 60 µm et 75 µm ; entre 15% et 30% en poids de composants dont la taille des particules est comprise entre 45 µm et 60 µm ; 5-15% en poids de composants dont la taille des particules est comprise entre 38 µm et 45 µm ; et entre 5% et 15% de composants dont la taille des particules est inférieure à 38 µm.

5. Procédé selon la revendication 1, **caractérisé en ce que** le produit d'émaillage contient un pourcentage d'agent de suspension, en soi connu, inférieur à 5%, de préférence égal à 2% en poids de liquide.

6. Procédé selon la revendication 1, **caractérisé en ce que** le produit d'émaillage est déposé sur la surface du carreau à l'aide d'un aérographe.

7. Carreau en grès cérame comprenant une surface de marche émaillée, **caractérisé par** la présence sur cette surface de marche d'une pluralité de grains dont la taille des particules est inférieure à 100 µm, lesdits grains étant recouverts, en surface, d'un émail vitrifiant et durcissant, ledit mélange de grains comprenant deux grains, un premier grain ayant la composition suivante :
- A1203 entre 10% et 20% en poids du total ;
- CaO entre 10% et 20% en poids du total ;
- K2O entre 1% et 5% en poids du total ;
- MgO entre 1% et 5% en poids du total ;
- Na2O entre 1% et 5% en poids du total ;
- SiO2 entre 50% et 60% en poids du total ;
- SrO entre 1% et 5% en poids sur le total ;
- ZnO entre 1% et 5% en poids du total,
la deuxième graine ayant la composition suivante :
- A1203 entre 20% et 30% en poids du total ;
- CaO entre 5% et 10% en poids du total ;
- K2O entre 1% et 5% en poids du total ;
- MgO entre 1% et 5% en poids du total ;
- Na2O entre 1% et 5% en poids du total ;
- SiO2 entre 50% et 60% en poids du total ;
- ZnO entre 1% et 5% en poids du total.
